Europäisches Patentamt

European Patent Office

Office européen des brevets

(11) Numéro de publication : **0 451 232 B1**

(12) **FASCICULE DE BREVET EUROPEEN**

(45) Date de publication du fascicule du brevet :
23.03.94 Bulletin 94/12

(51) Int. Cl.$^5$ : **H04B 1/66**

(21) Numéro de dépôt : **90914692.0**

(22) Date de dépôt : **02.10.90**

(86) Numéro de dépôt international :
**PCT/EP90/01666**

(87) Numéro de publication internationale :
**WO 91/06155 02.05.91 Gazette 91/10**

(54) PROCEDE ET CIRCUIT D'ACQUISITION DE CODE POUR RECEPTEUR DE SIGNAL A SPECTRE ETALE.

(30) Priorité : **12.10.89 FR 8913360**

(43) Date de publication de la demande :
**16.10.91 Bulletin 91/42**

(45) Mention de la délivrance du brevet :
**23.03.94 Bulletin 94/12**

(84) Etats contractants désignés :
**DE FR GB IT**

(56) Documents cités :
**US-A- 4 774 715**

(56) Documents cités :
**Proceedings of Melecon '87, Mediterranean Electrotechnical Conference, 24-26 March 1987, Rome, Italy (New York, US), pages 157-161; M.K. Sust et al.: "All digital signal processing in a spread spectrum communication system"**
**Patent Abstract of Japan, vol. 8, no. 135 (E-252)(1572), 22 June 1984 & JP, A, 5945739**

(73) Titulaire : **AGENCE SPATIALE EUROPEENNE**
**8-10, rue Mario Nikis**
**F-75738 Paris Cedex 15 (FR)**

(72) Inventeur : **ZAREMBOVITCH, Alain**
**J.Th. De Visserstraat 53**
**NL-ZH Katwijk (NL)**

(74) Mandataire : **Vanderperre, Robert et al**
**Bureau Vander Haeghen S.A. Rue Colonel Bourg 108 A**
**B-1040 Bruxelles (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé et un circuit d'acquisition de code pour un récepteur de signal à spectre étalé, c'est-à-dire un récepteur destiné à démoduler un signal produit par la modulation d'un signal électrique avec un code binaire et bruité.

Un signal modulé par un code binaire est utilisé par exemple dans les systèmes de communications radioélectriques et les systèmes radar à compression d'impulsions. Un récepteur destiné à recevoir et démoduler un signal modulé en MDP (modulation par déplacement de phase) par un code binaire doit contenir un circuit organisé pour procéder à une recherche initiale afin de déterminer la position correcte du code du signal bruité reçu parmi un grand ensemble de positions possibles, la séquence binaire du code étant supposée connue a priori. Ce procédé de recherche est appelé "acquisition de code" et le circuit ayant pour fonction d'effectuer cette recherche est appelé circuit d'acquisition de code.

La plupart des circuits d'acquisition de code connus ( par exemple du document " PROCEEDINGS OF MELECON 1987, Mediterranean Electrotechnical Conference, 24-26.03.1987, Rome, Italie (New York, Etats unix), pages 157 - 161, M.K. Sust et al.: " All digital signal processing in a spread spectrum communication system" " et de US-A-4 774 715 ) sont basés sur la mise en oeuvre d'un procédé de traitement des signaux comprenant un processus de corrélation (désétalement) suivi d'un processus de détection quadratique. Après amplification et transposition dans la bande de fréquences adéquate (fréquence intermédiaire ou bande de base), le signal reçu est mélangé avec un code de référence fixé pour une position de code donnée, puis le signal mélangé est filtré et élevé au carré, et ensuite il est appliqué à un circuit intégrateur. La sortie de l'intégrateur est comparée à un seuil et lorsque le niveau du signal intégré traverse le niveau du seuil, cela indique que, selon toute probabilité, le signal reçu est un signal à spectre étalé et que la position de code de ce signal concorde avec la position du code de référence.

S'il y a concordance de position entre le signal bruité reçu et le code de référence, le signal présent à la sortie du mélangeur est une porteuse à bande étroite. La bande large du bruit, quant à elle, se trouve étalée davantage par le processus de mélange avec le code de référence et le filtre à bande étroite qui suit le mélangeur rejette le bruit à bande large et améliore ainsi le rapport porteuse/bruit.

Par contre, s'il y a défaut de concordance entre les positions du code de référence et du signal bruité reçu, la porteuse, tout comme le bruit à la sortie du mélangeur, sont des signaux à bande large et le filtre à bande étroite les rejette tous deux. Le rapport porteuse/bruit reste alors inchangé.

La largeur de bande du filtre étroit détermine la bande de réception de la porteuse. Elle doit être suffisamment large pour contenir une porteuse à bande étroite affectée par un effet Doppler et par l'incertitude de fréquence inhérente aux oscillateurs locaux. D'autre part, la largeur de bande du filtre doit être suffisamment étroite pour rejeter la plupart des bruits à bande large et la porteuse étalée lorsque la position du code de référence n'est pas correcte.

Au processus de corrélation décrit ci-dessus fait suite un processus de détection quadratique qui a pour but de détecter la présence d'une porteuse dans un bruit blanc gaussien additif. Le temps d'intégration et le seuil sont ajustés pour détecter une porteuse désétalée (cas équivalent à une position de code correcte) et pour ne pas détecter une porteuse étalée (cas équivalent à une position de code incorrecte), et cela avec un degré de fiabilité élevé. Typiquement, la probabilité de détection voulue est supérieure à 0,9 et la probabilité désirée de fausse acquisition par tentative est inférieure à 0,001.

Pour obtenir une réjection rapide des positions de code incorrectes, la sortie de l'intégrateur peut être évaluée durant l'intégration au lieu de l'être à la fin de l'opération comme décrit plus haut. Ce processus modifié, appelé acquisition séquentielle, réduit le temps d'acquisition par un facteur d'environ deux à trois.

Dans les circuits d'acquisition connus le processus de corrélation est effectué sur des signaux analogiques et le filtrage se fait donc à l'aide d'un filtre analogique. Ensuite, le signal désétalé est échantillonné et quantifié au moyen d'un convertisseur analogique-numérique à multiples éléments binaires. Le processus de traitement ultérieur est effectué en numérique.

Ce processus connu présente les inconvénients suivants :

a) la réalisation du traitement partiellement en analogique entraîne un manque de souplesse, une construction complexe non reproductible et, dans certaines applications, la nécessité d'accorder le circuit;

b) nécessité d'utiliser au moins un convertisseur analogique-numérique complexe et coûteux;

c) la réalisation matérielle du processus d'acquisition séquentielle plus rapide conduit souvent à utiliser des processeurs numériques microprogrammés de traitement du signal, qui sont des circuits complexes travaillant à peu près à leur pleine capacité.

Ces inconvénients empêchent généralement la réalisation d'un traitement parallèle qui permettrait d'augmenter la vitesse d'acquisition car un tel traitement parallèle dans ce cas conduirait à des circuits beaucoup trop complexes.

EP 0 451 232 B1

Le but de la présente invention est de pallier ces inconvénients en résolvant le problème consistant à augmenter la vitesse d'acquisition d'un code tout en conservant au circuit d'acquisition un minimum de complexité.

Pour résoudre ce problème, l'invention propose un système d'acquisition de code qui met en oeuvre un procédé d'acquisition numérique et un circuit d'acquisition de construction simple permettant la réalisation d'un traitement parallèle rapide.

Un aspect de l'invention a pour objet un procédé d'acquisition de code pour démoduler un signal à spectre étalé produit par la modulation d'un signal électrique avec un code binaire, lequel procédé est remarquable en ce qu'on convertit le signal à spectre étalé en signal binaire quantifié à un élément binaire, on connecte en parallèle plusieurs circuits de détection binaires, chacun d'eux étant destiné à détecter une position de code distincte, et on connecte les circuits de détection binaires pour recevoir le signal binaire. A chaque circuit de détection on applique simultanément une version décalée dans le temps distincte d'un code de référence binaire de manière à détecter une position distincte du code, chaque circuit de détection produisant un signal ayant un premier état binaire lorsque le signal reçu correspond à la position de code du circuit de détection et ayant un second état binaire dans le cas contraire, et on utilise l'ensemble des signaux de sortie des circuits de détection pour identifier la position de code correcte afin de démoduler le signal reçu.

L'invention a également pour objet un circuit d'acquisition de code pour récepteur de signal à spectre étalé produit par modulation d'un signal électrique avec un code binaire, remarquable en ce qu'il comprend un détecteur de passage par zéro pour convertir le signal à spectre étalé en un signal binaire à un élément binaire, plusieurs circuits de détection binaires ayant leurs premières entrées connectées en parallèle pour recevoir le signal binaire, chaque circuit de détection étant destiné à détecter une position de code distincte, et produire un signal de détection binaire ayant un premier état binaire lorsque le signal reçu pendant une période de temps prédéterminée concorde avec la position de code du circuit de détection et ayant un second état binaire dans le cas contraire, un registre à décalage progressant en réponse à des impulsions d'horloge, ledit registre à décalage ayant la sortie d'un étage distinct connectée à une seconde entrée d'un circuit de détection distinct, l'entrée du registre à décalage étant connectée pour recevoir un code de référence binaire de manière que chaque sortie d'étage dudit registre délivre une version décalée dans le temps du code de référence binaire.

Des moyens de sortie combinent et/ou codent les signaux de détection de tous les circuits de détection de manière à identifier la position de code correcte du signal reçu en vue de sa démodulation.

Une forme de réalisation préférée pour les circuits de détection comprend un circuit OU-exclusif ayant une entrée pour recevoir le signal d'entrée binaire et une entrée pour recevoir le code de référence binaire dans une version décalée dans le temps et ayant une sortie pour produire un signal binaire désétalé, un premier moyen pour accumuler des signaux binaires chaque fois que le signal est à l'état logique 1 pendant une première période d'intégration prédéterminée de manière à produire un premier signal accumulé, des moyens pour comparer la valeur du premier signal accumulé à deux niveaux de seuil prédéterminés et pour produire un second signal binaire ayant un état logique 1 lorsque ledit premier signal accumulé est compris entre les deux valeurs de seuil, un moyen pour accumuler des signaux binaires chaque fois que ledit second signal binaire est un état logique 1 pendant une deuxième période d'intégration prédéterminée de manière à produire un second signal accumulé, et un moyen comparateur connecté à la sortie du premier moyen accumulateur afin de produire un signal de détection binaire lorsque le second signal accumulé dépasse un troisième niveau de seuil prédéterminé.

Les avantages obtenus grâce à l'invention sont un temps d'acquisition considérablement plus petit que celui qu'il est possible d'obtenir avec les circuits d'acquisition connus et la possibilité de réaliser le circuit sous forme d'un circuit intégré.

L'invention est exposée plus en détail dans ce qui suit à l'aide des dessins joints qui représentent un mode de réalisation exemplaire.

La figure 1 est un schéma général d'un circuit d'acquisition conforme à l'invention.

La figure 2 est un schéma par blocs d'un circuit de détection exemplaire utilisé dans le circuit d'acquisition de la figure 1.

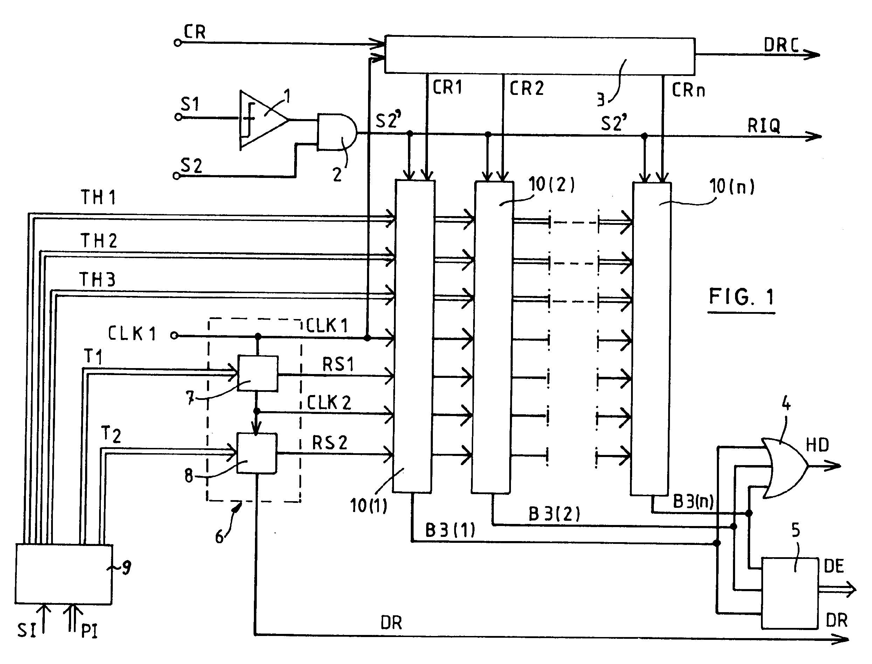

Un circuit d'acquisition selon l'invention est représenté à la figure 1. Le signal d'entrée a spectre étalé S1 est reçu dans un détecteur de passage par zéro 1 qui convertit continuement le signal analogique d'entrée en un signal numérique S2' à un élément binaire un signal positif se trouve converti en un signal logique 1 et un signal négatif se trouve converti en un signal logique 0. Le signal binaire S2' est transféré vers plusieurs circuits de détection numériques 10. Le circuit-ET 2 (facultatif) est prévu dans ce mode d'exécution exemplaire pour permettre également de transférer directement un signal d'entrée binaire S2 en contournant le détecteur 1 qui n'est pas nécessaire dans ce cas.

Le signal binaire S2' est appliqué à plusieurs circuits de détection 10 en parallèle, chaque circuit de détection étant destiné à détecter une position de code différente. Outre le signal S2', chaque circuit de détection 10 reçoit également une version décalée différente d'un code de référence binaire CR. Ces versions décalées

3

du code de référence CR sont produites par un registre à décalage 3 progressant en réponse à des impulsions d'horloge CLK1. Les versions décalées du code de référence sont désignées par les signes de référence CR1, CR2 ... CRn.

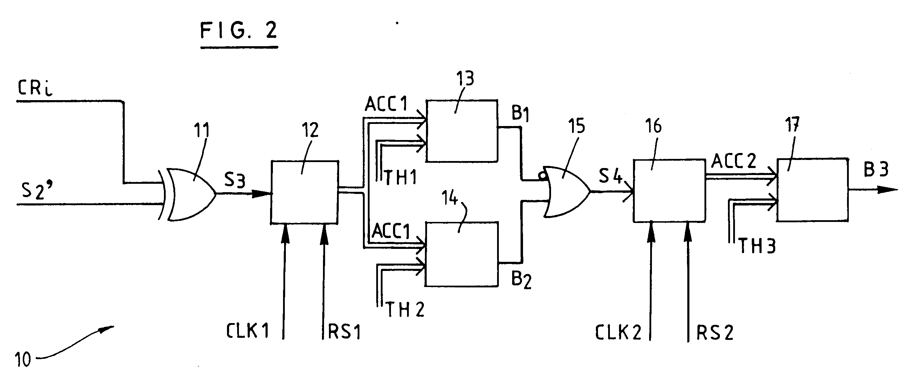

Chaque circuit de détection 10 est agencé comme illustré schématiquement à la figure 2. Le signal binaire S2' est reçu à une entrée d'un circuit OU-exclusif 11 dont une autre entrée reçoit le code de référence binaire CR dans une version décalée dans le temps distincte (CR1, CR2 ... CRn). Le rôle du circuit OU-exclusif 11 est de désétaler la porteuse étalée, représentée par le signal binaire S2', au moyen du code de référence CR lorsque la position du code reçu et celle du code de référence coïncident. Le signal S3 obtenu à la sortie du circuit OU-exclusif 11 est un signal binaire. Lorsque la position du code reçu et celle du code de référence CRi sont différentes, ou lorsqu'un bruit seul est présent à l'entrée du récepteur, le signal S3 est aléatoire et prend un état 0 ou un état 1 avec une égale probabilité. Par contre, lorsque le code reçu et le code de référence ont la même position, le signal S3 se maintient essentiellement dans un des états logiques (0 ou 1) suivant la phase de la porteuse pendant la période d'intégration T1. Le signal S3 est introduit dans un compteur à incrémentation 12 progressant en réponse a des impulsions d'horloge CLK1. A chaque impulsion d'horloge CLK1, le contenu du compteur 12 mis à jour, son contenu augmente d'une unité lorsque et seulement lorsque le signal S3 est à l'état logique 1. Le compteur 12 est remis à zéro à chaque transition d'un signal de remise à zéro RS1.

Juste avant la remise à zéro du compteur 12, le contenu ACC1 du compteur (exprimé par un nombre de N1 éléments binaires) est transféré dans les comparateurs 13 et 14 en parallèle pour y être comparé à deux niveaux de seuil. Dans le comparateur 13 le contenu ACC1 est comparé à un seuil inférieur TH1 et dans le comparateur 14 le contenu ACC1 est comparé à un seuil supérieur TH2. Les seuils TH1 et TH2 sont des nombres entiers à N1 éléments binaires, déterminés par l'utilisateur. La sortie B1 du comparateur 13 est à l'état 1 lorsque le contenu ACC1 du compteur 12 est supérieur au seuil inférieur TH1 et elle est à l'état 0 dans le cas contraire. De même, la sortie B2 du comparateur 14 est à l'état 1 lorsque le contenu ACC1 du compteur 12 est supérieur au seuil supérieur TH2 et à l'état 0 dans le cas contraire. Les sorties des comparateurs 13 et 14 sont combinées dans un circuit logique 15 réalisant la fonction logique :

$$S4 = \overline{B1} . OU . B2$$

Si les seuils TH1 et TH2 sont choisis par l'utilisateur de telle sorte que TH2 = T1 - TH1, les dispositifs 13, 14 et 15 réalisent une fonction ayant pour effet d'éliminer le biais dû au bruit du contenu variable ACC1, prendre la valeur absolue du contenu et comparer celle-ci à un seuil TH2 - T1/2.

L'état logique du signal S4 indique si le contenu du compteur 12 est compris entre les seuils TH1 et TH2 ou si ce contenu est situé en dehors de cette gamme de valeurs. Le signal S4 est à l'état 1 lorsque le contenu ACC1 est compris entre les deux seuils TH1 et TH2; le signal S4 est à l'état 0 lorsque le contenu ACC1 a une valeur située en dehors de la gamme de valeurs comprise entre les deux seuils.

Le signal binaire S4 à la sortie du circuit logique 15 est introduit dans un second compteur à incrémentation 16 progressant en réponse à des impulsions d'horloge CLK2. A chaque impulsion d'horloge, le contenu du compteur 16 est mis à jour : il se trouve incrémenté lorsque et uniquement lorsque le signal S4 est un état logique 1 lors d'une transition du signal d'horloge CLK2. Le compteur 16 se trouve remis à zéro en réponse à un signal de remise à zéro RS2. Le rôle du compteur 16 est de filtrer la valeur absolue du signal désétalé à spectre étroit.

Le contenu ACC2 du compteur 16 est comparé à un seuil TH3 dans le comparateur 17. La comparaison peut se faire de façon continue ou à la fin de la période d'intégration fixée par le signal de remise à zéro RS2. Le seuil TH3 est un nombre entier à N2 bits, fixé par l'utilisateur. La sortie B3 du comparateur 17 est un état logique 1 lorsque le contenu ACC2 est plus grand que le seuil TH3 et elle est un état logique 0 dans les autres cas. A la fin de la période d'intégration, le signal B3 indique si la position du code du signal reçu coïncide avec la position du code de référence appliqué à l'entrée du circuit de détection.

Les sorties B3(1), B3(2) ... B3(n) des circuits de détection 10 sont combinées dans un circuit-OU 4. Celui-ci produit un signal HD qui est à l'état logique 1 lorsque l'un quelconque des signaux de détection B3(1), B3(2) ... B3(n) est un état logique 1, c'est-à-dire lorsqu'un circuit de détection 10 a détecté une position de code correcte. Un codeur binaire 5, qui reçoit aussi les sorties B3(1), B3(2) ... B3(n) des circuits de détection 10, identifie celle des positions de code qui est correcte et produit un signal d'identification en format binaire noté DE. Dans le cas où plusieurs positions de référence sont déclarées positives durant le temps d'intégration T2, le signal DE désigne l'adresse du circuit de détection qui a détecté en premier une position de code correcte, et par conséquent la position de code correspondante. La position de code détectée sert alors pour la démodulation du signal reçu dans le récepteur.

Il est clair que le circuit d'acquisition selon l'invention permet, dans une période d'intégration T2 donnée, d'acquérir le code beaucoup plus rapidement que par un processus d'acquisition séquentiel. Avec un registre à décalage 3 comportant N étages, le temps d'acquisition est N fois plus petit qu'avec un circuit d'acquisition comportant un seul détecteur. La mise en parallèle de N détecteurs dans le circuit d'acquisition de code selon l'invention n'est cependant pratiquement réalisable que grâce au procédé de détection binaire mis en oeuvre dans chaque circuit de détection et à la simplicité de réalisation de ce circuit de détection.

Les impulsions d'horloge et les signaux de remise à zéro sont engendrés à partir d'une horloge-mère délivrant des impulsions d'horloge CLK1 ayant avantageusement une fréquence égale au double du débit de code. Celui-ci est de préférence grand par rapport à la fréquence centrale du spectre du signal d'entrée S1. Les impulsions d'horloge CLK1 provenant d'une horloge-mère (non représentée) sont reçues dans un circuit de génération 6. Les impulsions CLK1 sont appliquées directement à l'entrée d'horloge du registre à décalage 3 et au compteur 12 dans chaque circuit de détection 10. Le signal périodique de remise à zéro RS1 du premier étage de détection ainsi que les impulsions d'horloge CLK2 utilisées dans le second étage de détection sont produits par division de la fréquence du signal CLK1 par un nombre entier T1 dans un circuit diviseur 7. La transition du signal RS1 précède la transition du signal CLK2 de quelques impulsions d'horloge CLK1. Le signal périodique de remise à zéro RS2 du second étage de détection est produit par division de la fréquence du signal CLK2 par un nombre entier T2 dans un circuit diviseur 8.

La performance de détection (probabilité de détection et probabilité de fausse alarme) d'un circuit d'acquisition tel que décrit ci-dessus peut être réglée au moyen de cinq paramètres programmables, à savoir :

T1 : le temps d'intégration du compteur 12 (détection cohérente), exprimé par un nombre entier d'impulsions d'horloge CLK1.

TH1 : le seuil inférieur pour la détection cohérente, exprimé par un nombre de N1 bits.

TH2 : le seuil supérieur pour la détection cohérente, exprimé par un nombre de N1 bits.

T2 : le temps d'intégration du compteur 16 (détection non cohérente), exprimée par un nombre entier d'impulsions périodes d'horloge CLK2.

TH3 : le seuil pour la détection non cohérente exprimé par un nombre de N2 bits.

Du point de vue construction, le circuit possède deux degrés de liberté : le nombre de bits N1 et le nombre de bits N2.

A la fin de chaque période d'intégration T2, le circuit de génération 6 produit un signal de sortie DR indiquant que les données de sortie HD et DE sont prêtes.

Dans un mode d'exécution exemplaire, les paramètres TH1, TH2, TH3, T1 et T2 peuvent être multiplexés afin de limiter le nombre de broches du circuit. Le circuit d'interface 9 représenté dans la figure 1 permet à la fois la connexion (PI) avec un dispositif d'interface parallèle compatible avec un microprocesseur et la connexion (SI) avec un dispositif d'interface série.

Le mode de réalisation de l'invention décrit dans ce qui précède est un exemple donné à titre illustratif et l'invention n'est nullement limitée à cet exemple.

Par exemple, la sortie DRC du registre a décalage 3 et la sortie RIQ peuvent servir à la connexion avec d'autres circuits d'acquisition afin d'accroître encore les possibilités de traitement parallèle. Egalement, le degré d'intégration déjà élevé du circuit d'acquisition selon l'invention peut encore être accru si l'on décale les impulsions d'horloge pour chaque circuit de détection individuellement. Dans ce cas, en effet, un ensemble de comparateurs 13, 14 et/ou 17 seulement peut être utilisé pour plusieurs ou tous les circuits de détection grâce à la technique de l'accès par partage dans le temps. Cela est parfaitement possible puisque les comparateurs dans un circuit de détection ne sont utilisés que pendant une période de quelques impulsions d'horloge seulement. Un autre exemple intéressant est la réalisation du circuit avec un seuil TH3 qui se trouve ajusté dynamiquement.

## Revendications

1. Procédé d'acquisition de code pour démoduler un signal à spectre étalé produit par la modulation d'un signal électrique avec un code binaire,
   caractérisé en ce qu'on convertit le signal à spectre étalé (S1) en signal binaire (S2'),
   on connecte en parallèle plusieurs circuits de détection binaires (10), chacun d'eux étant destiné à détecter une position de code distincte,
   on connecte les circuits de détection binaires (10) pour recevoir le signal binaire (S2'),
   on applique simultanément à chaque circuit de détection (10) une version décalée dans le temps distincte (CR1, CR2 ... CRn) d'un code de référence binaire (CR), chaque circuit de détection (10) produisant un signal (B3) ayant un premier état binaire lorsque le signal reçu correspond à la position de code du circuit de détection et ayant un second état binaire dans le cas contraire,
   on utilise l'ensemble des signaux de sortie (B3) des circuits de détection (10) pour identifier la position de code correcte afin de démoduler le signal reçu.

**2.** Circuit d'acquisition de code pour récepteur de signal à spectre étalé produit par modulation d'un signal électrique avec un code binaire,

caractérisé en ce qu'il comprend un détecteur de passage par zéro (1) pour convertir le signal à spectre étalé (S1) en un signal binaire (S2') à un élément binaire,

plusieurs circuits de détection binaires (10) ayant leurs premières entrées connectées en parallèle pour recevoir le signal binaire (S2'), chaque circuit de détection étant destiné à détecter une position de code distincte, et produire un signal de détection binaire (B3) ayant un premier état binaire lorsque le signal reçu pendant une période de temps prédéterminée (T2) concorde avec la position de code du circuit de détection et ayant un second état binaire dans le cas contraire,

un registre à décalage (3) progressant en réponse à des impulsions d'horloge (CLK1), ledit registre à décalage ayant la sortie d'un étage distinct connectée à une seconde entrée d'un circuit de détection (10) distinct, l'entrée du registre à décalage (3) étant connectée pour recevoir un code de référence binaire (CR) de manière que chaque sortie d'étage dudit registre délivre une version décalée dans le temps (CR1, CR2 ... CRn) du code de référence binaire (CR), et des moyens de sortie (4, 5) pour combiner et/ou coder les signaux de détection (B3) de tous les circuits de détection (10) de manière à identifier la position de code correcte du signal à spectre étalé reçu.

**3.** Dispositif selon la revendication 2, caractérisé en ce que chaque circuit de détection (10) comprend un circuit OU-exclusif (11) ayant une entrée pour recevoir le signal d'entrée binaire (S2') et une entrée pour recevoir le code de référence binaire dans une version décalée dans le temps (CR1, CR2 ... CRn) et ayant une sortie pour produire un signal binaire désétalé (S3),

un premier moyen (12) pour accumuler des signaux binaires chaque fois que le signal (S3) est à l'état logique 1 pendant une première période d'intégration (T1) prédéterminée de manière à produire un premier signal accumulé (ACC1),

des moyens (13, 14, 15) pour comparer la valeur du premier signal accumulé (ACC1) à deux niveaux de seuil (TH1, TH2) prédéterminés et pour produire un second signal binaire (S4) ayant un état logique 1 lorsque ledit premier signal accumulé (ACC1) est compris entre les deux niveaux de seuil (TH1, TH2),

un moyen (16) pour accumuler des signaux binaires chaque fois que ledit second signal binaire (S4) est un état logique 1 pendant une deuxième période d'intégration (T2) prédéterminée de manière à produire un second signal accumulé (ACC2), et

un moyen comparateur (17) connecté à la sortie du premier moyen accumulateur (16) afin de produire un signal de détection binaire (B3) lorsque le second signal accumulé (ACC2) dépasse un troisième niveau de seuil (TH3) prédéterminé.

**4.** Dispositif selon la revendication 3, caractérisé en ce que les moyens accumulateur (13-15) comprennent des comparateurs (13, 14) connectés à la sortie dudit premier moyen accumulateur (12) afin de produire un premier signal (B1) lorsque le premier signal accumulé (ACC1) dépasse un niveau de seuil inférieur (TH1) et produire un deuxième signal (B2) lorsque ledit premier signal accumulé (ACC1) dépasse un niveau de seuil supérieur (TH2), et un circuit logique (15) pour combiner lesdits premier et deuxième signaux (B1 et B2) et produire le second signal binaire (S4) précité suivant la fonction logique $S4 = \overline{B1} \cdot OU \cdot B2$.

## Claims

**1.** Code acquisition process for demodulating a spread spectrum signal generated by modulation of an electrical signal with a binary code, characterized by the steps of:

converting the spread spectrum signal (S1) into a binary signal (S2'),

connecting a plurality of binary detection circuits (10) in parallel, each of them being adapted to detect a different code epoch,

connecting the binary detection circuits (10) for receiving the binary signal (S2'),

applying simultaneously to each detection circuit (10) a different time shifted version (CR1, CR2 ... CRn) of a binary reference signal (CR), whereby each detection circuit (10) generates a signal (B3) having a first binary state when the received signal correponds to the code epoch of the detection circuit and having a second binary state should it be otherwise,

using all the output signals (B3) from the detection circuits (10) for identifying the correct code epoch to demodulate the received signal.

**2.** A code acquisition circuit for demodulating a spread-spectrum signal generated by modulation of an electrical signal with a binary code, characterized by comprising a zero-crossing detector (1) for converting the spread-spectrum signal (S1) into a one-bit binary signal (S2'), a plurality of binary detection circuits (10) having their first inputs connected in parallel for receiving said one-bit binary signal (S2'), each detection circuit being adapted for detecting an individual code epoch and produce a binary detection signal (B3) having a first binary state when the signal received within a predetermined period of time ($T_2$) corresponds to the code epoch of the detection circuit and having a second binary state should it be otherwise, a shift register (3) advancing in response to clock pulses (CLK1), said shift register having the output of a different stage thereof connected to a second input of a different detection circuit (10), said shift register having its input connected to receive a binary reference code (CR) whereby each stage output of said register provides a time shifted version (CR1, CR2 ... CRn) of the binary reference code (CR), and output means (4, 5) for combining and/or encoding the detection signals (B3) from all the detection circuits (10) so as to identify the correct code epoch of the said received spread-spectrum signal.

3. An apparatus according to claim 2, characterized in that each detection circuit (10) comprises an exclusive-OR gate (11) having an input for receiving the binary input signal (S2') and an input for receiving the binary reference code in a time shifted version (CR1, CR2 ... CRn) and having an output for generating a despread binary signal (S3),
first means (12) for accumulating binary signals each time the signal (S3) has a logical state 1 during a predetermined first integration period (T1) so as to generate a first accumulated signal (ACC1),
means (13, 14, 15) for comparing the value of the first accumulated signal (ACC1) to two predetermined threshold levels (TH1, TH2) and for generating a second binary signal (S4) having a logical state 1 when said first accumulated signal (ACC1) is comprised between said two threshold levels (TH1, TH2),
means (16) for accumulating binary signals each time said second binary signal (S4) has a logical state 1 during a second predetermined integration period (T2) so as to generate a second accumulated signal (ACC2), and comparator means (17) connected to the output of said second accumulating means (16) in order to generate a binary detection signal (B3) when the second accumulated signal (ACC2) exceeds a third predetermined threshold level (TH3).

4. An apparatus according to claim 3, characterized in that the comparing means (13-15) comprise comparators connected to the output of said first accumulating means to generate a first signal (B1) when the first accumulated signal (ACC1) exceeds a lower threshold level (TH1) and to generate a second signal (B2) when said first accumulated signal (ACC1) exceeds an upper threshold level (TH2), and a logical circuit (15) for combining said first and second signals (B1 and B2) and generate said second binary signal (S4) in accordance with the logical function $S4 = \overline{B1} . OR . B2$.

**Patentansprüche**

1. Codeerfassungsverfahren zur Demodulierung eines Spreizspektrumsignals, erzeugt durch Modulierung eines elektrischen Signals mit einem binären Code, dadurch gekennzeichnet, daß man das Spreizspekrumsignal (S1) in ein binäres Signal (S2) umwandelt,
mehrere binäre Detektionskreise (10) parallel schaltet, wobei jeder von ihnen bestimmt ist zur Detektion einer unterschiedlichen Codeposition,
die binären Detektionskreise (10) verbindet um das binäre Signal (S2) zu erhalten,
gleichzeitig an jedem Detektionskreis (10) eine zeitlich verschobene Version (CR1, CR2...CRn) eines binären Referenzcodes (CR) verwendet, wobei jeder Detektionskreis (10) ein Signal (B3) erzeugt, welches einen ersten binären Zustand aufweist, wenn das empfangene Signal der Codeposition des Detektionskreises entspricht, und einen zweiten binären Zustand im gegenteiligen Fall,
die Gesamtheit der Ausgangssignale (B3) verwendet zur Identifikation der korrekten Codeposition, um das erhaltene Signal zu demodulieren.

2. Schaltkreis zur Erfassung eines Codes für einen Empfänger eines Breitspektrumsignals, das durch Modulation eines elektrischen Signals mittels eines binären Codes erzeugt wird, dadurch gekennzeichnet, daß dieser umfasst
   - einen Detektor mit Nulldurchgang (1), um das Breitspektrumsignal (S1) in ein binäres Signal (S2) umzuwandeln, mit einem binären Element,
   - mehrere binäre Detektionskreise (10), deren erste Eingänge parallel geschaltet sind, um das binäre Signal (S2) zu empfangen, wobei jeder Detektionskreis dazu bestimmt ist, eine bestimmte Position des Codes zu ermitteln und ein binäres Detektionssignal (B3) zu erzeugen mit einem ersten binären Zustand, wenn das empfangene Singal während einer vorbestimmten Zeitperiode (T2) übereinstimmt mit der Codeposition des Detektionskreises, und mit einem zweiten binären Zustand im gegenteiligen Fall,

- einen Zeitverschiebungsspeicher (3), fortschreitend nach Maßgabe von Zeitimpulsen (CLK1) dessen Ausgang einer getrennten Stufe an einem zweiten Eingang eines getrennten Detektionskreises (10) angeschlossen ist, wobei der Eingang des Zeitgliedes in der Weise zum Empfang eines binären Referenzcodes (CR) angeschlossen ist, das jeder Ausgang einer Stufe besagten Zeitgliedes eine zeitversetzte Version (CR1, CR2...CRn) des binären Referenzcodes (CR) liefert, und Ausgangsmittel (4,5) zur Kombination und/oder Codierung der Detektionssignale (B3) aller Detektionskreise (10) derart, um die korrekte Codeposition des erhaltenen Breitspektrumsignals zu identifizieren.

3. Schaltkreis nach Anspruch 2, <u>dadurch gekennzeichnet,</u> daß jeder Detektionskreis (10) eine OU-Exklusiv-Schaltung (11) umfasst mit einem Eingang zum Empfang des binären Eingangssignals (S2), einem Eingang zum Empfang des binären Referenzcodes in einer zeitversetzten Version (CR1, CR2...CRn) und einem Ausgang zur Erzeugung eines nicht verbreiterten binären Signals (S3),

- ein erstes Mittel (12) zum Sammeln der binären Signale, und zwar jedesmal, wenn sich das Signal (S3) im logischen Zustand 1 während einer vorgegebenen Integrationsperiode (T1) befindet, derart, daß es ein erstes akkumuliertes Signal (ACC1) ergibt,
- Mittel (13,14,15) zum Vergleichen des Wertes des ersten akkumulierten Signals (ACC1) mit zwei vorgegebenen Schwellwerten (TH1, TH2) und zur Erzeugung eines zweiten binären Signals (S4) mit einem logischen Zustand 1, wenn das erste akkumulierte Signal (ACC1) sich zwischen beiden Schwellwert-Niveaus (TH1, TH2) befindet,
- ein Mittel (16) zur Akkumulierung binärer Signale, jedesmal, wenn das genannte zweite binäre Signal (S4) sich in einem logischen Zustand 1 befindet während einer zweiten vorbestimmten Integrationsperiode (T2), in der Weise, daß ein zweites akkumuliertes Signal (ACC2) erzeugt wird,
- und ein Vergleichsmittel (17), verbunden mit dem Ausgang des ersten Speichermittels (16), um ein binäres Detektionssignal (B3) zu erzeugen, wenn das zweite akkumulierte Signal (ACC2) ein drittes vorbestimmtes Schwellniveau (TH3) überschreitet.

4. Schaltkreis nach Anspruch 3, <u>dadurch gekennzeichnet,</u> daß die Akkumulierungsmittel (13,14,15) Komparatoren (13, 14) umfassen, die mit dem Ausgang des genannten ersten Akkumulationsmittels (12) verbunden sind, um ein erstes Signal (B1) zu erzeugen, wenn das erste akkumulierte Signal (ACC1) ein unteres Schwellniveau (TH1) überschreitet, und ein zweites Signal (B2) zu erzeugen, wenn das genannte erste akkumulierte Signal (ACC1) ein oberes Schwellniveau (TH2) überschreitet, und einen Logik-Kreis (15) zur Kombination des genannten ersten und zweiten Signals (B1 und B2) und zur Erzeugung des zweiten vorgenannten binären Signals (S4) gemäß der logischen Funktion $S4 = B1 \cdot OU \cdot B2$.

FIG. 1

EP 0 451 232 B1

FIG. 2

EP 0 451 232 B1